# EUROPÄISCHE PATENTSCHRIFT

(11) **EP 2 003 744 B1**
(45) Veröffentlichungstag und Bekanntmachung des Hinweises auf die Patenterteilung: **05.08.2009**
(21) Anmeldenummer: 07011678.5
(22) Anmeldetag: 14.06.2007
(51) Int. Cl.: H01S 3/04, H01S 5/024

(54) **Gasgekühltes Lasergerät für hochkompakte Laserstrahlquellen**
Gas cooled laser device for highly compact laser beam sources
Appareil laser refroidi au gaz pour sources de rayonnement laser très compactes

(43) Veröffentlichungstag der Anmeldung: 17.12.2008
(73) Patentinhaber: Trumpf Laser Marking Systems AG, 7214 Grüsch (CH)
(72) Erfinder: Büche, Dirk, 7215 Fanas (CH); Zimer, Hagen, 07743 Jena (DE); Ziolek, Carsten, 7212 Seewis-Dorf (CH)
(74) Vertreter: Kohler Schmid Möbus

(56) Entgegenhaltungen:
- EP-A- 1 324 440
- JP-A- 2005 166 735
- US-A- 5 901 167
- US-A1- 2004 179 570
- US-A1- 2005 123 011
- US-B1- 6 330 155

## Beschreibung

Die vorliegende Erfindung betrifft ein gasgekühltes Lasergerät mit dissipativen optischen und dissipativen nicht-optischen Komponenten und mit Gehäusewänden aus wärmeleitendem Material, insbesondere aus Metall, von denen eine oder mehrere mit Lüftungskanälen versehen sind.

Ein derartiges luftgekühltes Lasergerät ist beispielsweise durch die US 5,901,167 bekannt geworden.

In vielen Bereichen der industriellen Lasermaterialbearbeitung besteht der Wunsch nach kompakten Lasergeräten, bei denen die Verlustwärme mittels einfacher Gas- bzw. Luftkühlung abgeführt wird. Im Vergleich zur häufig verwendeten Wasserkühlung hat die Gas- bzw. Luftkühlung den Vorteil, dass die Anzahl der am Kühlkreislauf beteiligten Komponenten wesentlich geringer ist und dadurch das Ausfallrisiko des Lasergerätes drastisch reduziert wird. Für die Laserstrahlquelle des Lasergeräts bedeutet die Luftkühlung eine Eliminierung potentieller Wasserleckagen, was ebenfalls die Zuverlässigkeit des Lasergeräts steigert.

Bei bekannten wassergekühlten Lasergeräten befindet sich die Laserstrahlquelle in einem Laserkopf und dessen Versorgungseinheit in einem separaten Versorgungsgerät, in welchem sich auch eine zentrale Kühleinheit befindet. Die im Laserkopf dissipierte Leistung wird samt der im Versorgungsgerät anfallenden Verlustleistung mittels eines Wasserkreislaufs zur Kühleinheit transportiert und dort über einen Wärmetauscher an die Umgebung abgegeben. Es gibt bei der Wasserkühlung für diese Konfiguration meist nur einen einzigen Ort, an dem der Wärmeaustausch erfolgt, nämlich das Versorgungsgerät. Da Wasser aufgrund seiner Wärmekapazität ein relativ gutes Wärmetransportmedium ist, kann die Wärme aus dem Laserkopf sehr effizient abgeführt und dessen Bauvolumen entsprechen kompakt gestaltet werden.

Im Vergleich hierzu ist die konvektive Wärmeabfuhr mittels Gas bzw. Luft aus dem Laserkopf trotz ihrer Vorteile hinsichtlich ihrer Kompaktheit grundsätzlich weniger effizient. Bei bekannten luftgekühlten Lasergeräten werden meist konventionelle Metall-Rippenkühlkörper mit einem hohen Wärmeübergangswiderstand verwendet. Diese Kühlkörper haben meist nur eine einzige Kühlfläche und ein großes Bauvolumen. Das große Bauvolumen und die beschränkte Einbaumöglichkeit dieser Kühlkörper limitieren jedoch die Kompaktheit des Laserkopfes und schränken die Konstruktionsmöglichkeiten erheblich ein. Bei der Verwendung kommerzieller Kühlkörper für den Laserkopf schließen sich Kühleffizienz einerseits und Kompaktheit und Designfreiheitsgrad meist aus.

Aus der eingangs genannten US 5,901,167 ist ein luftgekühltes Gaslasergerät bekannt, wobei die optischen und die elektronischen Komponenten in zwei räumlich getrennten, separaten Gehäusen innerhalb des Lasergeräts untergebracht sind. Das Elektronikgehäuse für die elektronischen Komponenten ist oberhalb des Optikgehäuses für die optischen Komponenten angeordnet. Das Optik- und das Elektronikgehäuse weisen jeweils seitlich horizontale Kühlrippen auf. Über ein Gebläse wird Luft bereitgestellt, die innerhalb des Lasergeräts zwischen zwei separaten Kühlstrecken für Optik- und Elektronikgehäuse aufgeteilt wird. Die eine Kühlstrecke führt durch horizontale Lüftungskanäle, die zwischen den seitlichen Kühlrippen des Elektronikgehäuses und einer seitlichen Abdeckung des Lasergeräts gebildet sind, und die andere Kühlstrecke durch horizontale Lüftungskanäle, die zwischen den seitlichen Kühlrippen des Optikgehäuses und der seitlichen Abdeckung gebildet sind. Die elektronischen Komponenten sind innerhalb des Elektronikgehäuses auf einer separaten dünnen Leiterplatte aus Kunststoff montiert, die zwar am Elektronikgehäuse befestigt ist, aber selbst nur wenig Wärme ableiten kann. Daher wird die Wärme der elektronischen Komponenten vornehmlich über die im Elektronikgehäuse vorhandene Luft an das luftgekühlte Elektronikgehäuse abgeführt.

Weiterhin ist aus der US 2005/0123011 A1 ein ebenfalls luftgekühltes Gaslasergerät bekannt, bei dem das Optik- und das Elektronikgehäuse nebeneinander und in Anlage aneinander angeordnet sind. Das Optik- und das Elektronikgehäuse weisen jeweils seitlich horizontale Kühlrippen auf. Der durch ein Gebläse bereitgestellte Luftstrom strömt entlang der horizontalen Längsachse des Lasergeräts je nach Gebläserichtung zunächst durch horizontale Lüftungskanäle, die zwischen den seitlichen Kühlrippen des Elektronikgehäuses und einer seitlichen Abdeckung des Lasergeräts gebildet sind, und dann durch horizontale Lüftungskanäle, die zwischen den seitlichen Kühlrippen des Optikgehäuses und der seitlichen Abdeckung gebildet sind, oder umgekehrt.

Dokument US 2004/179570 A1 offenbart ein gasgekühltes Lasergerät mit dissipativen Komponenten und mit Gehäusewänden aus wärmeleitendem Material, von denen eine oder mehrere mit Luftungskanälen versehen sind, wobei mindestens eine dissipative Komponente an der einen Plattenseite einer Platte aus wärmeleitendem Material, insbesondere aus Metall, montiert ist, die mit der mindestens einen mit Luftungskanälen versehen Gehäusewand thermisch leitend verbunden ist, wobei Laserrohr und Elektronik sowohl mechanisch als auch thermisch voneinander entkoppelt sind.

Die Aufgabe der vorliegenden Erfindung besteht darin, bei einem gasgekühlten Lasergerät der eingangs genannten Art die Kühlung bei einfacher Umsetzung zumindest der IP-54-Schutzklasse noch effizienter zu gestalten und eine noch kompaktere Bauweise zu ermöglichen.

Diese Aufgabe wird durch ein Lasergerät gemäss Anspruch 1 gelöst.

Diese Aufgabe wird erfindungsgemäß dadurch gelöst, dass mindestens eine dissipative Komponente, bevorzugt mindestens eine dissipative optische Komponente und mindestens eine dissipative nicht-optische Komponente, besonders bevorzugt alle dissipativen Komponenten, an einer Platte aus wärmeleitendem Material, insbesondere aus Metall, montiert sind, die mit der mindestens einen mit Lüftungskanälen versehenen Gehäusewand thermisch leitend verbunden ist. Im Betrieb sind die Lüftungskanäle an ein Gebläse angeschlossen, das vorzugsweise im Lasergerät angeordnet ist.

Der wesentliche Vorteil der Erfindung besteht darin, dass die dissipativen optischen Komponenten einer Laserstrahlquelle, wie z.B. Güteschalter, Laserkristall und Strahlfalle, und die dissipativen elektronischen Leistungskomponenten der Laserstrahlquelle an der gleichen Platte montiert sind und dass die von diesen dissipativen Komponenten in die Platte abgeführte Wärme über die Platte sehr effizient nach außen zu den gasgekühlten Gehäusewänden abgeleitet wird. Die dissipativen Komponenten sind an beiden Plattenseiten der Platte montiert .

Bei bevorzugten Ausführungsformen der Erfindung ist die Platte an mindestens einer mit Lüftungskanälen versehenen Gehäusewand thermisch leitend befestigt, insbesondere zwischen zwei mit Lüftungskanälen versehenen Gehäusewänden angeordnet und an diesen thermisch leitend befestigt, so dass die von den dissipativen Komponenten in die Platte abgeführte Wärme unmittelbar in die gasgekühlten Gehäusewände abgeleitet wird.

Vorzugsweise sind dissipative optische Komponenten und dissipative nicht-optische Komponenten jeweils an unterschiedlichen Plattenseiten der Platte und/oder jeweils in unterschiedlichen Räumen, die auf der gleichen Plattenseite der Platte vorgesehen und durch die Platte begrenzt sind, angeordnet.

Bei ganz besonders bevorzugten Ausführungsformen der Erfindung verlaufen die Lüftungskanäle innerhalb der Gehäusewand. Diese innengeführte Luftkühlung der Gehäusewände ermöglicht eine besonders kompakte Bauweise bei gleichzeitiger Umsetzung höherer IP-Schutzklassen, z. B. IP-54 und höher, und hat ferner eine homogene Temperaturverteilung im Lasergehäuse zur Folge. Außerdem ist das Lasergerät damit stabil gegenüber variierenden Umgebungsbedingungen und kann lageunabhängig aufgestellt werden. Zusätzlich können auch in der Platte Lüftungskanäle verlaufen, die ebenfalls an das Gebläse angeschlossen sind.

Besonders vorteilhaft ist es, wenn die Geometrie der Lüftungskanäle so ausgeformt ist, dass ein hindurchströmender Gas- bzw. Luftstrom im Bereich der Platte seine maximale Strömungsgeschwindigkeit erreicht, um effizient Wärme aus der Platte abzuführen. Dazu können die Lüftungskanäle beispielsweise in Form einer VenturiDüse ausgestaltet sein. Die Gas- bzw. Luftströmungen können sowohl laminar als auch turbulent eingestellt sein.

Die Platte und insbesondere die mit Lüftungskanälen versehenen Gehäusewände können jeweils separate Wände sein, die zu einem Gehäuse zusammengefügt sind, oder aus einem einzigen Metallteil gefertigt sein. Die Platte und zwei einander gegenüberliegende, insbesondere mit Lüftungskanälen versehene Gehäusewände können vorteilhaft einen H- oder U-förmigen Querschnitt bilden. Eine solche H-förmige Querschnittstruktur kann z.B. aus einem Aluminium-Quader hergestellt werden, in den von zwei einander gegenüberliegenden Seiten jeweils ein größerer Hohlraum hineingefräst wird. Dabei kann der eine Hohlraum einen Optikraum für die optischen Komponenten (z.B. Laserresonator und Strahlformung) der Laserstrahlquelle und der andere Hohlraum einen Versorgungsraum für eine Leistungsversorgungseinheit der Laserstrahlquelle bilden. An der beiden Räumen gemeinsamen Mittelplatte dieser H-förmigen Querschnittstruktur sind vorzugsweise alle dissipativen Komponenten des Lasergeräts montiert. Weitere Vorteile der H-förmigen Querschnittstruktur sind die damit einhergehende Verwindungssteifigkeit des gesamten Lasergehäuses und die homogene Temperaturverteilung im Lasergehäuse.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Es zeigen:

- Fig. 1: eine perspektivische Ansicht von oben auf das erfindungsgemäße Lasergerät mit geschlossenem Deckelteil (Fig. 1a) und mit abgenommenem Deckelteil (Fig. 1 b) sowie eine perspektivische Ansicht von unten auf das Lasergerät bei abgenommenem Bodenteil (Fig. 1c);
- Fig. 2: schematisch einen Längsschnitt durch das Lasergerät von Fig. 1; und
- Fig. 3: eine weitere Ausführungsform des erfindungsgemäßen Lasergeräts in einer Ansicht analog zu Fig. 2.

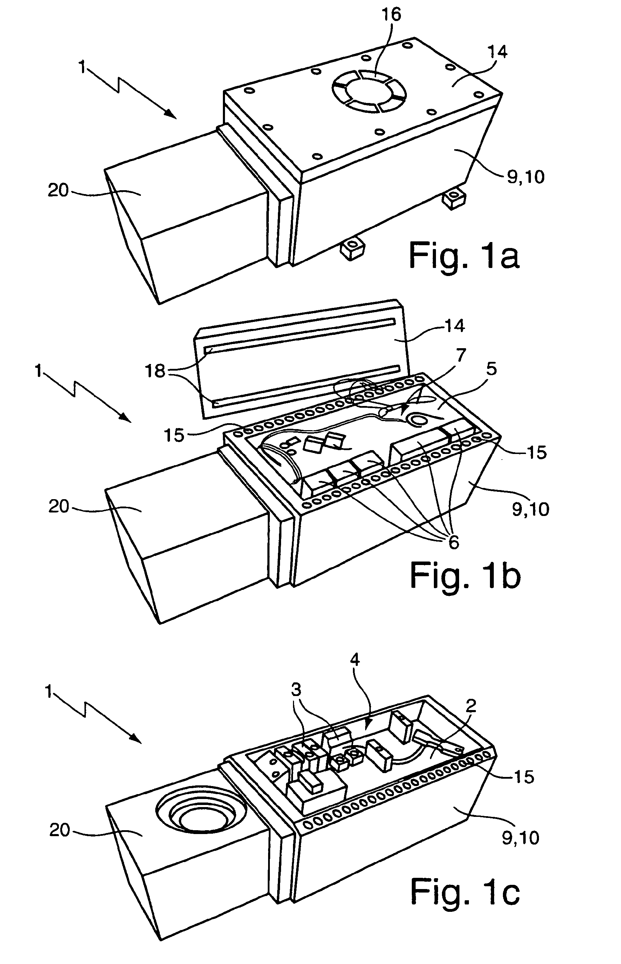

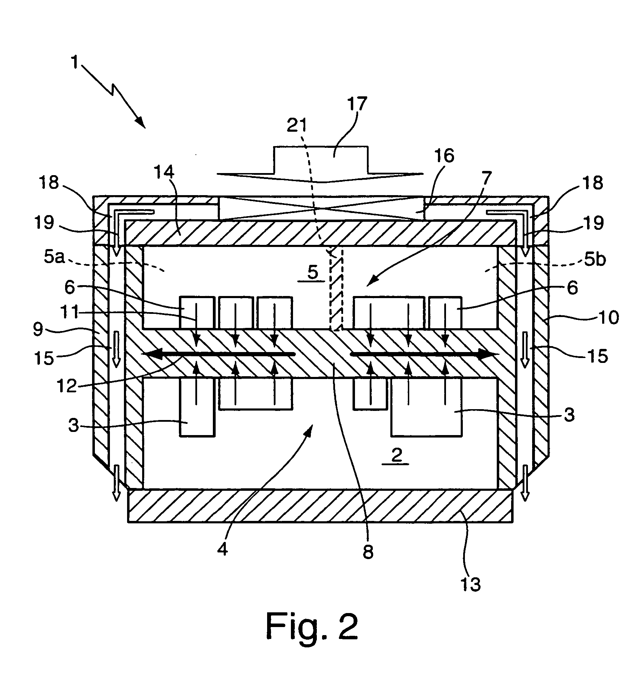

Das in Fig. 1 und 2 gezeigte Lasergerät **1** weist einen unteren Optikraum **2,** in dem alle optischen Komponenten **3** einer Laserstrahlquelle **4** angeordnet sind, und einen oberen Versorgungsraum **5** auf, in dem alle elektronischen Leistungskomponenten **6** einer Versorgungs- und/oder Ansteuereinrichtung (Elektronik) **7** für die Laserstrahlquelle 4 angeordnet sind. Die Laserstrahlquelle 4 ist im gezeigten Ausführungsbeispiel ein diodengepumpter Festkörperlaser (z.B. Nd:YAG oder Nd:YVO₄), dessen optische Komponenten 3, wie z.B. ein Laserresonator mit Auskoppelspiegel, Rückspiegel und dazwischen angeordnetem Laserkristall, sowie ggf. ein Güteschalter, eine Strahlfalle und eine Strahlformung, im Optikraum 2 angeordnet sind.

Der Optikraum 2 und der Versorgungsraum 5 sind voneinander durch eine gemeinsame Zwischenwand (Platte) **8** getrennt, die zwischen zwei Seitenwänden **9, 10** des Optikraums 2 und des Versorgungsraums 5 angeordnet und an diesen thermisch leitend befestigt ist. An der Unterseite der gemeinsamen Zwischenwand 8 sind zumindest alle dissipativen optischen Komponenten 3 der Laserstrahlquelle 4, also z.B. Güteschalter, Laserkristall und Strahlfalle, und auf der Oberseite zumindest alle dissipativen elektronischen Leistungskomponenten 6 montiert, und zwar jeweils in thermischem Kontakt mit der Platte 8. Vorzugsweise sind auf der gemeinsamen Zwischenwand 8 alle optischen und elektronischen Komponenten 3, 6 montiert. Die von den dissipativen Komponenten 3, 6 in die gemeinsame Zwischenwand 8 abgeführte Wärme (Wärmestrom-Pfeile **11)** wird über die Zwischenwand 8 sehr effektiv nach außen zu den luft- bzw. gasgekühlten Seitenwänden 9, 10 abgeleitet (Wärmestrom-Pfeile **12).** Die gemeinsame Zwischenwand 8 und die Seitenwände 9, 10 sind aus wärmeleitendem Material, bevorzugt aus einem Metall wie Aluminium.

Die gemeinsame Zwischenwand 8 und die Seitenwände 9, 10 der beiden Räume 2, 5 können einteilig aus einem Metallteil hergestellt sein, z.B. aus einem Aluminium-Quader, in den von zwei Seiten jeweils ein größerer Hohlraum hineingefräst wurde, wodurch dieses Frästeil einen H-förmigen Querschnitt mit der gemeinsamen Zwischenwand 8 als Mittelplatte aufweist. Der untere Hohlraum bildet den Optikraum 2 für Laserresonator und Strahlformung und ist mit einer Bodenplatte **13** verschlossen, der obere Hohlraum bildet den Versorgungsraum 5 für die Versorgungs- und/oder Ansteuereinrichtung 7 und ist mit einer Deckelplatte **14** verschlossen. Ein weiterer Vorteil des H-förmigen Querschnitts ist die damit einhergehende Verwindungssteifigkeit des gesamten Gehäuses.

Innerhalb der beiden einander gegenüberliegenden Seitenwände 9, 10 verlaufen vertikale Lüftungskanäle **15,** die jeweils durch eine Reihe von durchgehenden parallelen vertikalen Bohrungen gebildet sind. In der Deckelplatte 14 befindet sich ein vorzugsweise als Radiallüfter ausgebildetes Gebläse **16,** das Luft oder ein anderes Gas ansaugt (Luft-/Gasstrom-Pfeil **17).** Die Lüftungskanäle 15 jeder der beiden Seitenwände 9, 10 sind jeweils über einen in der Deckelplatte 14 quer zu den Lüftungskanälen 15 verlaufenden, nach unten offenen Verteilerkanal **18** an das Gebläse 16 angeschlossen. Über die Verteilerkanäle 18 wird die vom Gebläse 16 angesaugte Luft oder ein Gas in die Lüftungskanäle 15 gedrückt (Luft-/Gasstrom-Pfeile **19),** wird dort erwärmt und tritt schließlich am unteren Ende der Seitenwände 9 über Luftaustrittsschlitze wieder aus. Mit anderen Worten wird die von beiden Räumen 2, 5 in die gemeinsame Zwischenwand 8 abgeführte Wärme durch die in den Seitenwänden 9, 10 innengeführte Luftkühlung weggeführt. Für eine optimale Wärmeableitung sollte die gemeinsame Zwischenwand 8 etwa so dick wie die mit Lüftungskanälen 15 versehenen Seitenwände 9, 10 des Optikraumes 2 und des Versorgungsraumes 5 sein.

Wie in Fig. 1 gezeigt, weist das Lasergerät 1 noch einen Optikvorsatz **20** zum Fokussieren und/oder Ablenken des im Optikraum 2 erzeugten und über einen Auskoppelspiegel aus dem Optikraum 2 ausgekoppelten Laserstrahls auf.

Wie in Fig. 2 gestrichelt angedeutet, kann z.B. der Versorgungsraum 5 durch eine Trennwand **21** in zumindest zwei separate Räume **5a, 5b** unterteilt sein.

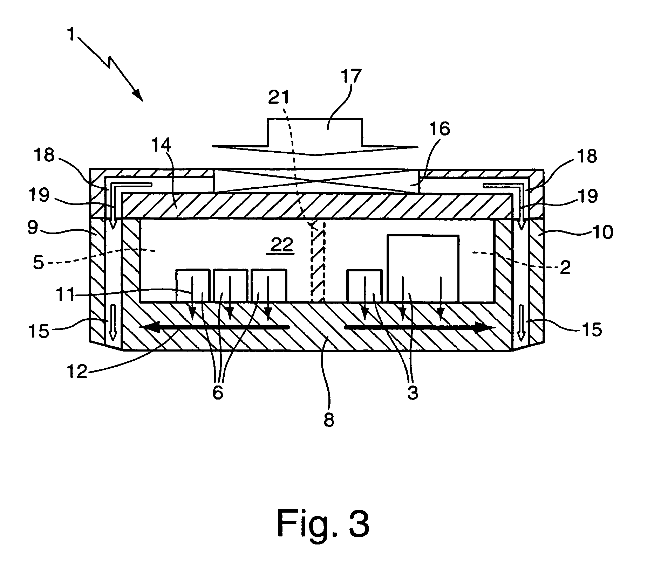

Vom Lasergerät der Fign. 1 und 2 unterscheidet sich das in **Fig. 3** gezeigte Lasergerät 1 lediglich dadurch, dass hier die gemeinsame Zwischenwand 8 und die beiden mit Lüftungskanälen 15 versehenen Seitenwände 9, 10 einen U-förmigen Querschnitt bilden. Diese U-förmige Querschnittstruktur kann einteilig aus einem Metallteil hergestellt sein, z.B. aus einem Aluminium-Quader, in den von einer Seite ein größerer Hohlraum hineingefräst wurde, wodurch dieses Frästeil einen U-förmigen Querschnitt mit der gemeinsamen Zwischenwand 8 als Grundplatte aufweist. Alle dissipativen optischen und elektronischen Komponenten 3, 6 sind auf der Innenseite der gemeinsamen Zwischenwand 8 angeordnet, und zwar entweder in einem gemeinsamen Raum **22** oder, wie gestrichelt angedeutet, in jeweils separaten Räumen 2, 5, die durch eine Trennwand 21 voneinander getrennt sind.

Zusammenfassend gesagt weist das erfindungsgemäße Lasergerät ein kompaktes Gehäuse mit einer integrierten Luft- bzw. Gaskühlung auf, die eine lageunabhängige Kühlung des Lasergerätes erlaubt, die eine einfache Umsetzung zumindest der IP-54-Schutzklasse ermöglicht, die eine homogene Temperaturverteilung im Lasergehäuse erzeugt und die das Lasergerät unempfindlich gegenüber variierenden Umweltbedingungen wie Temperatur, Feuchtigkeit und Konvektionsverhältnissen macht. Dies ist für ein industrielles Lasergerät von besonderer Bedeutung, denn die eigentliche Laserstrahlquelle wird durch die integrierte Luftkühlung von thermischen Umgebungseinflüssen, wie z.B. die thermische Deformierung einer Resonatoraufbauplatte, entkoppelt. So können auch bei unterschiedlichen Umgebungsbedingungen die spezifizierten Laserparameter des Lasergerätes beibehalten werden. Das Gehäuse des Lasergerätes ist demnach multifunktional, denn es ist zugleich Kühlkörper, Befestigungsplattform für diverse optische und elektronische Komponenten, sowie Abgrenzung des Gehäuseinneren zur Umgebung.

## Patentansprüche

1. Gasgekühltes Lasergerät (1) mit dissipativen Komponenten, insbesondere dissipativen optischen und dissipativen nicht-optischen Komponenten (3, 6), und mit Gehäusewänden (9, 10) aus wärmeleitendem Material, insbesondere aus Metall, von denen eine oder mehrere mit Lüftungskanälen (15) versehen sind, wobei mindestens eine dissipative Komponente an der einen
Plattenseite einer Platte (8) aus wärmeleitendem Material, insbesondere aus Metall, montiert ist, die mit der mindestens einen mit Lüftungskanälen (15) versehenen Gehäusewand (9, 10) thermisch leitend verbunden ist,
**dadurch gekennzeichnet,**
**dass** mindestens eine andere dissipative Komponente an der anderen Plattenseite der Platte (8) montiert ist.

2. Gasgekühltes Lasergerät nach Anspruch 1, **dadurch gekennzeichnet, dass** die Platte (8) zwischen zwei mit Lüftungskanälen (15) versehenen
Gehäusewänden (9, 10) angeordnet und an diesen thermisch leitend verbunden ist.

3. Gasgekühltes Lasergerät nach einem der vorhergehenden Ansprüche,
**dadurch gekennzeichnet, dass** an einer Plattenseite oder zu beiden Plattenseiten der Platte (8) jeweils ein oder mehrere Räume (2, 5, 5a, 5b, 22) vorgesehen sind, die durch die Platte (8) begrenzt sind.

4. Gasgekühltes Lasergerät nach einem der vorhergehenden Ansprüche,
**dadurch gekennzeichnet, dass** dissipative optische Komponenten (3) und dissipative nicht-optische Komponenten (6) jeweils an unterschiedlichen Plattenseiten der Platte (8) montiert sind.

5. Gasgekühltes Lasergerät nach einem der vorhergehenden Ansprüche,
**dadurch gekennzeichnet, dass** die Lüftungskanäle (15) innerhalb der Gehäusewand (9, 10) verlaufen.

6. Gasgekühltes Lasergerät nach einem der vorhergehenden Ansprüche,
**dadurch gekennzeichnet, dass** die Lüftungskanäle (15) einer Gehäusewand (9, 10) jeweils durch eine Reihe von parallelen Kanälen gebildet sind.

7. Gasgekühltes Lasergerät nach einem der vorhergehenden Ansprüche,
**dadurch gekennzeichnet, dass** die Geometrie der Lüftungskanäle (15) so ausgeformt ist, dass ein hindurchströmender Gasstrom im Bereich der Platte (8) seine maximale Strömungsgeschwindigkeit erreicht.

8. Gasgekühltes Lasergerät nach einem der vorhergehenden Ansprüche,
**dadurch gekennzeichnet, dass** die Platte (8) und eine oder mehrere der mit Lüftungskanälen (15) versehenen Gehäusewände (9, 10) miteinander stoffschlüssig verbunden, insbesondere aus einem Teil gefertigt sind.

9. Gasgekühltes Lasergerät nach einem der vorhergehenden Ansprüche,
**dadurch gekennzeichnet, dass** die Platte (8) und zwei einander gegenüberliegende, insbesondere mit Lüftungskanälen (15) versehene Gehäusewände (9, 10) einen H- oder U-förmigen Querschnitt bilden.

10. Gasgekühltes Lasergerät nach einem der vorhergehenden Ansprüche,
**dadurch gekennzeichnet, dass** die Platte (8) mindestens so dick wie eine mit Lüftungskanälen (15) versehene Gehäusewand (9, 10) ist.

11. Gasgekühltes Lasergerät nach einem der vorhergehenden Ansprüche,
**dadurch gekennzeichnet, dass** die Lüftungskanäle (15) jeder Gehäusewand (9, 10) jeweils über mindestens einen quer zu den Lüftungskanälen (15) verlaufenden Verteilerkanal (18) an ein Gebläse (16) angeschlossen sind.

12. Gasgekühltes Lasergerät nach einem der vorhergehenden Ansprüche, **gekennzeichnet durch** ein Gebläse (16), an das die Lüftungskanäle (15) angeschlossen sind.

## Claims

1. Gas-cooled laser device (1) having dissipative components, especially dissipative optical and dissipative non-optical components (3, 6), and having housing walls (9, 10) made of heat-conducting material, especially metal, one or more of which are provided with ventilation channels (15), wherein at least one dissipative component is mounted on the one face of a plate (8) made of heat-conducting material, especially metal, which plate (8) is connected in a thermally conductive manner to the at least one housing wall (9, 10) provided with ventilation channels (15),
**characterised in**
**that** at least one other dissipative component is mounted on the other face of the plate (8).

2. Gas-cooled laser device according to claim 1, **characterised in that** the plate (8) is disposed between and connected in a thermally conductive manner to two housing walls (9, 10) provided with ventilation channels (15).

3. Gas-cooled laser device according to either of the preceding claims, **characterised in that** one or more chambers (2, 5, 5a, 5b, 22) defined by the plate (8) are provided on one face of the plate or on both faces of the plate (8).

4. Gas-cooled laser device according to any one of the preceding claims, **characterised in that** dissipative optical components (3) and dissipative non-optical components (6) are respectively mounted on different faces of the plate (8).

5. Gas-cooled laser device according to any one of the preceding claims, **characterised in that** the ventilation channels (15) extend inside the housing wall (9, 10).

6. Gas-cooled laser device according to any one of the preceding claims, **characterised in that** the ventilation channels (15) of a housing wall (9, 10) are in each case formed by a row of parallel channels.

7. Gas-cooled laser device according to any one of the preceding claims, **characterised in that** the geometry of the ventilation channels (15) is such that a stream of gas flowing therethrough reaches its maximum flow speed in the region of the plate (8).

8. Gas-cooled laser device according to any one of the preceding claims, **characterised in that** the plate (8) and one or more of the housing walls (9, 10) provided with ventilation channels (15) are connected to one another by virtue of their material, especially are made from one piece.

9. Gas-cooled laser device according to any one of the preceding claims, **characterised in that** the plate (8) and two opposing housing walls (9, 10), especially housing walls (9, 10) provided with ventilation channels (15), form an H-shaped or a U-shaped cross-section.

10. Gas-cooled laser device according to any one of the preceding claims, **characterised in that** the plate (8) is at least as thick as a housing wall (9, 10) provided with ventilation channels (15).

11. Gas-cooled laser device according to any one of the preceding claims, **characterised in that** the ventilation channels (15) of each housing wall (9, 10) are connected in each case to a fan (16) via at least one distribution channel (18) extending transversely to the ventilation channels (15).

12. Gas-cooled laser device according to any one of the preceding claims, **characterised by** a fan (16) to which the ventilation channels (15) are connected.

## Revendications

1. Appareil laser refroidi au gaz (1) avec des composants dissipatifs, en particulier des composants dissipatifs optiques et dissipatifs non optiques (3, 6) et avec des parois de boîtier (9, 10) en matériau thermoconducteur, en particulier en métal, dont une ou plusieurs sont pourvues de canaux de ventilation (15), au moins un composant dissipatif étant monté d'un côté de plaque d'une plaque (8) en matériau thermoconducteur, en particulier en métal, qui est relié de manière thermoconductrice à au moins une paroi de boîtier (9, 10) pourvue de canaux de ventilation (15),
**caractérisé en ce**
**qu'**au moins un autre composant dissipatif est monté de l'autre côté de plaque de la plaque (8).

2. Appareil laser refroidi au gaz selon la revendication 1, **caractérisé en ce que** la plaque (8) est disposée entre deux parois de boîtier (9, 10) pourvues de canaux de ventilation (15) et reliée à celles-ci de manière thermoconductrice.

3. Appareil laser refroidi au gaz selon l'une des revendications précédentes, **caractérisé en ce que** d'un côté de plaque ou des deux côtés de plaque de la plaque (8) sont prévues chaque fois une ou plusieurs chambres (2, 5, 5a, 5b, 22) qui sont limitées par la plaque (8).

4. Appareil laser refroidi au gaz selon l'une des revendications précédentes, **caractérisé en ce que** des composants dissipatifs optiques (3) et des composants dissipatifs non optiques (6) sont montés chaque fois sur des côtés de plaque différents de la plaque (8).

5. Appareil laser refroidi au gaz selon l'une des revendications précédentes, **caractérisé en ce que** les canaux de ventilation (15) s'étendent à l'intérieur de la paroi de boîtier (9, 10).

6. Appareil laser refroidi au gaz selon l'une des revendications précédentes, **caractérisé en ce que** les canaux de ventilation (15) d'une paroi de boîtier (9, 10) sont chaque fois formés par une série de canaux parallèles.

7. Appareil laser refroidi au gaz selon l'une des revendications précédentes, **caractérisé en ce que** la géométrie des canaux de ventilation (15) est formée de manière qu'un courant de gaz traversant atteigne sa vitesse d'écoulement maximale au niveau de la plaque (8).

8. Appareil laser refroidi au gaz selon l'une des revendications précédentes, **caractérisé en ce que** la plaque (8) et une ou plusieurs des parois de boîtier (9, 10) pourvues de canaux de ventilation (15) sont reliées entre elles par liaison de matière, en particulier réalisées en une seule pièce.

9. Appareil laser refroidi au gaz selon l'une des revendications précédentes, **caractérisé en ce que** la plaque (8) et deux parois de boîtier (9, 10) situées l'une en face de l'autre, en particulier pourvues de canaux de ventilation (15), forment une section en H ou en U.

10. Appareil laser refroidi au gaz selon l'une des revendications précédentes, **caractérisé en ce que** la plaque (8) est au moins aussi épaisse qu'une paroi de boîtier (9, 10) pourvue de canaux de ventilation (15).

11. Appareil laser refroidi au gaz selon l'une des revendications précédentes, **caractérisé en ce que** les canaux de ventilation (15) de chaque paroi de boîtier (9, 10) sont raccordés à un ventilateur (16) chaque fois par l'intermédiaire d'au moins un canal de distribution (18) s'étendant transversalement par rapport aux canaux de ventilation (15).

12. Appareil laser refroidi au gaz selon l'une des revendications précédentes, **caractérisé par** un ventilateur (16) auquel les canaux de ventilation (15) sont raccordés.
